# EUROPÄISCHE PATENTANMELDUNG

(11) **EP 2 284 027 A2**
(43) Veröffentlichungstag der Anmeldung: **16.02.2011**
(21) Anmeldenummer: 10171643.9
(22) Anmeldetag: 02.08.2010
(51) Int. Cl.: B60H 1/00

(54) **Kraftfahrzeugklimaanlage**

(30) Priorität: 14.08.2009 DE 102009037304
(71) Anmelder: Behr GmbH & Co. KG, 70469 Stuttgart (DE)
(72) Erfinder: Feith, Thomas, 70825, Korntal-Münchingen (DE); Klingler, Dietrich, 73540, Heubach (DE); Schwahn, Werner, 71701, Schwieberdingen (DE); Wolf, Walter, 71570, Oppenweiler-Zell (DE)
(74) Vertreter: Grauel, Andreas

(57) **Zusammenfassung**

Bei einer Kraftfahrzeugklimaanlage, umfassend ein Gehäuse aus miteinander verbundenen Gehäuseteilen (1, 2, 3), eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet ist, soll die Nut-Feder-Verbindung (6) zwischen den Gehauseteilen (1, 2, 3) eine sichere und zuverlässige Verbindung und Abdichtung, auch bei Verformungen, gewährleisten.

Diese Aufgabe wird dadurch gelöst, dass in der Nut (4) eine Dichtlippe (9) angeordnet ist und die Feder (5) zwischen der Dichtlippe (9) und der ersten Nutwandung (7) der Nut (4) angeordnet ist.

## Beschreibung

Die vorliegende Erfindung betrifft eine Kraftfahrzeugklimaanlage gemäß dem Oberbegriff der Ansprüche 1, 5, 10, 12 und 14.

Kraftfahrzeugklimaanlagen umfassen einen Kältemittelverdampfer, ein Gebläse, Luftleiteinrichtungen, z. B. Klappen, die in einem Gehäuse angeordnet sind. Das Gehäuse besteht im Allgemeinen aus Kunststoff und wird aus mehreren Gehäuseteilen, z. B. zwei oder vier Gehäuseteilen, zusammengesetzt. Die einzelnen Gehäuseteile werden mittels einer Nut-Feder-Verbindung miteinander verbunden.

Die DE 94 20 291 U1 zeigt ein Gehäuse aus zumindest zwei mittels einer Nut-Feder-Verbindung zusammensetzbaren Gehäuseteilen für ein Heiz- bzw. Klimagerät in einem Kraftfahrzeug mit einem Gehäuseteil mit einem Anlagerand mit einer nutartigen Vertiefung und einem anderen Gehäuseteil mit einem nockenartigen Vorsprung. Die nutartige Vertiefung ist mit dem nockenartigen Vorsprung gegenseitig federelastisch verrastbar. In nachteiliger Weise ist die Dichtheit der Nut-Feder-Verbindung bei Verformungen nicht gewährleistet und ferner besteht die Gefahr des Lösens der Nut-Feder-Verbindung bei großen auftretenden Kräften.

Die DE 81 13 742.7 U1 zeigt ein Gehäuse für eine Kraftfahrzeugklimaanlage aus mindestens zwei Gehäuseteilen, wobei die Gehäuseteile an den Verbindungsseiten flach ausgebildet sind und an einem ersten Gehäuseteil Haltebügel und an einem zweiten Gehäuseteil Rastnasen, die mit den Haltebügeln zusammenwirken, aufweisen. Das erste Gehäuseteil weist an seiner Verbindungsseite eine Nut auf, in die eine an der Verbindungsseite des zweiten Gehäuseteils angeordnete Feder eingreift. Die Rastnasen sind direkt an der Feder angeformt und die Haltebügel durch Öffnungen in einer Nutwand gebildet.

Die DE 199 43 278 A1 zeigt eine Nut-Feder-Verbindung von Gehäuseteilen eines Gehäuses einer Klimaanlage eines Kraftfahrzeuges mit einer Nut in einem der zu verbindenden Gehäuseteile und einer Feder an dem anderen Gehäuseteil, wobei die Feder im Querschnitt U-förmig ausgebildet ist und im zusammengesetzten Zustand der Gehäuseteile U-Schenkel der Feder an Seitenwänden der Nut unter Druck anliegen und die Feder im Verbindungsbereich der U-Schenkel mit dünnerer Wandstärke ausgebildet ist als die U-Schenkel, so dass die U-Schenkel federnd nachgiebig miteinander verbunden sind.

Die Aufgabe der vorliegenden Erfindung besteht deshalb darin, eine Kraftfahrzeugklimaanlage zur Verfügung zu stellen, bei der die Nut-Feder-Verbindung zwischen den Gehäuseteilen eine sichere und zuverlässige Verbindung und Abdichtung, auch bei Verformungen, gewährleistet.

Diese Aufgabe wird gelöst mit einer Kraftfahrzeugklimaanlage, umfassend ein Gehäuse aus miteinander verbundenen Gehäuseteilen, eine Nut-Feder-Verbindung zur Verbindung der Gehäuseteile mit einer von einer ersten und zweiten Nutwandung begrenzten Nut an einem Gehäuseteil und einer Feder an einem anderen Gehäuseteil, wobei die Feder zur Verbindung in der Nut angeordnet ist, wobei in der Nut eine Dichtlippe angeordnet ist und die Feder zwischen der Dichtlippe und der ersten Nutwandung der Nut angeordnet ist.

Die Dichtlippe ermöglicht ein Abdichten der Nut-Feder-Verbindung auch bei Verformungen im Bereich der Nut-Feder-Verbindung, weil die elastische Dichtlippe mögliche Verformungen innerhalb der Nut-Feder-Verbindung aufnehmen kann, so dass ständig ein Kontakt zwischen der Feder und der Dichtlippe vorhanden ist. Die Dichtlippe weist vorzugsweise ungefähr die gleiche Länge im Querschnitt auf wie die Rippe. Die Länge der Dichtlippe und/oder der Feder wird senkrecht zu einer Querrichtung gemessen. Insbesondere beträgt im Querschnitt die Länge der Dichtlippe wenigstens 20 % der Länge der Feder im Querschnitt. Dadurch kann sich eine relativ große Auflagefläche zum fluidmäßigen Abdichten zwischen der Dichtlippe und der Feder ausbilden.

Insbesondere weist die Dichtlippe im nicht eingebrachten Zustand der Feder in der Nut einen Abstand zu der zweiten Nutwandung auf, um die Dichtlippe beim Einführen der Feder in die Nut zu der zweiten Nutwandung biegen zu können. Der Abstand zwischen der zweiten Nutwandung und der Dichtlippe ermöglicht es auch Verformungen aufzunehmen, weil die Geometrie der Nut-Feder-Verbindung dahingehend ausgelegt ist, dass auch nach dem vollständigen Einführen der Feder in die Nut ein Abstand zwischen der Dichtlippe und der zweiten Nutwandung vorhanden ist, der mögliche Verformungen im Bereich der Nut-Feder-Verbindung aufnehmen kann.

In einer weiteren Ausgestaltung besteht die Dichtlippe wenigstens teilweise aus einem elastischen Material, z. B. Kunststoff. Die elastischen Eigenschaften der Dichtlippe ermöglichen es, Verformungen innerhalb der Nut-Feder-Verbindung aufzunehmen und dadurch auch bei Verformungen ein sicheres Abdichten der Nut-Feder-Verbindung weiterhin zu gewährleisten.

In einer ergänzenden Ausführungsform besteht das Gehäuse wenigstens teilweise aus Kunststoff und die Dichtlippe mittels, vorzugsweis mittels Umspritzen, an der ersten und/oder zweiten Nutwandung befestigt. Die Dichtlippe aus elastischem Material wird beim Spritzgießen des Gehäuseteiles vorher in das Werkzeug zum Spritzgießen eingelegt und anschließend wird die Dichtlippe mittels Umspritzen formschlüssig mit dem Kunststoff des Gehäuseteiles verbunden.

In einer weiteren Ausgestaltung ist die Dichtlippe in einem Bodenbereich der Nut an dem Gehäuse befestigt.

Erfindungsgemäße Kraftfahrzeugklimaanlage, umfassend ein Gehäuse aus miteinander verbundenen Gehäuseteilen, eine Nut-Feder-Verbindung zur Verbindung der Gehäuseteile mit einer von einer ersten und zweiten Nutwandung begrenzten Nut an einem Gehäuseteil und einer Feder an einem anderen Gehäuseteil, wobei die Feder zur Verbindung in der Nut angeordnet ist, wobei die Feder vor einem Einführen der Feder in die Nut in Querrichtung größer ist als die Nut, so dass wenigstens eine Nutwandung bei einem Einführen der Feder in die Nut von der Feder verformbar, insbesondere biegbar-, ist. Beim Einführen der Feder in die Nut wird aufgrund der Größe der Feder die Nut vergrößert. Im eingeführten Zustand der Feder in der Nut ist damit die Feder zwischen der ersten und zweiten Nutwandung unter Vorspannung eingeklemmt. Die Auflagefläche zwischen den beiden Nutwandungen und der Feder steht damit unter Druck, so dass hier eine sichere und zuverlässige Abdichtung und Verbindung gewährleistet ist.

Vorzugsweise ist die wenigstens eine Nutwandung in Querrichtung von der Feder beim Einführen der Feder in die Nut dahingehend verformbar, dass sich die Nut vergrößert.

In einer Variante weist die erste Nutwandung eine geringere Wandstärke auf als die zweite Nutwandung, so dass im Wesentlichen die erste Nutwandung beim Einführen der Feder in die Nut verformbar ist.

Zweckmäßig ist die Feder in Querrichtung um wenigstens 1 % größer ist als die Nut, so dass die wenigstens eine Nutwandung um wenigstens 0,5 % der Abmessung der Feder in Querrichtung bei dem Einführen der Feder in die Nut von der Feder verformbar, insbesondere biegbar, ist.

In einer weiteren Ausführungsform sind die erste und zweite Nutwandung in einem spitzen Winkel zueinander ausgerichtet, so dass die Nut einen keilförmigen Querschnitt aufweist und/oder die Feder einen keilförmigen Querschnitt aufweist. Die Nut als auch die Feder sind im Querschnitt keilförmig ausgebildet, so dass beim Einführen der Feder in die Nut die beiden oder eine Nutwandung von der Feder auseinandergedrückt werden.

Erfindungsgemäße Kraftfahrzeugklimaanlage, umfassend ein Gehäuse aus miteinander verbundenen Gehäuseteilen, eine Nut-Feder-Verbindung zur Verbindung der Gehäuseteile mit einer von einer ersten und zweiten Nutwandung begrenzten Nut an einem Gehäuseteil und einer Feder an einem anderen Gehäuseteil, wobei die Feder zur Verbindung in der Nut angeordnet und die Feder in der Nut formschlüssige fixiert ist, wobei die Geometrie der Feder und der Nut dahingehend ausgebildet sind, dass sich im Querschnitt wenigstens drei Auflageflächen der Feder auf der ersten und/oder zweiten Nutwandung ergeben und/oder die Nut wenigstens zwei Hinterschneidungen aufweist in die wenigstens zwei Vorsprünge der Feder eingreifen zur formschlüssigen Fixierung. Drei Auflageflächen der Feder auf den beiden Nutwandungen oder zwei Hinterschneidungen, in denen Vorsprünge der Feder eingreifen, ermöglichen eine besonders sichere und zuverlässige Verbindung zwischen der Nut und der Feder. Zur Herstellung der Nut-Feder-Verbindung ist es im Allgemeinen erforderlich, dass eine oder beide Nutwandungen verformt werden, d. h. dahingehend gebogen werden, dass sich die Nut vergrößert, um die Feder in die Nut einführen zu können.

In einer weiteren Ausführungsform weist die Feder und die erste und/oder zweite Nutwandung wenigstens drei ebene oder konvexe Flächen auf an denen die Feder auf der ersten und/oder zweiten Nutwandung aufliegt. Eine ebene und/oder eine konvexe Fläche an der Nutwandung im Bereich der Nut und/oder der Feder gestattet es, zuverlässig und sicher entsprechende Auflageflächen zwischen der Feder und der ersten und zweiten Nutwandung zu erhalten, weiche eine kontinuierliche und vollständige Abdichtung der Nutfederverbindung ermöglichen, so dass in der Nut-Feder-Verbindung im Wesentlichen keine Bereiche auftreten, an denen keine Auflageflächen vorhanden sind.

Erfindungsgemäße Kraftfahrzeugklimaanlage, insbesondere eine in dieser Anmeldung beschriebene Kraftfahrzeugklimaanlage, umfassend ein Gehäuse aus miteinander verbundenen Gehäuseteilen, eine Nut-Feder-Verbindung zur Verbindung der Gehäuseteile mit einer von einer ersten und zweiten Nutwandung begrenzten Nut an einem Gehäuseteil und einer Feder an einem anderen Gehäuseteil, wobei die Feder zur Verbindung in der Nut angeordnet ist, eine an dem einen und dem anderen Gehäuseteil angeordnete Klammer zum Verbinden des einen Gehäuseteils mit dem anderen Gehäuseteil, wobei die Klammer einteilig mit einem Gehäuseteil verbunden ist.

Die Klammer dient zum, vorzugsweise lösbaren, Verbinden der beiden Gehäuseteile mittels Formschluss und/oder Verklemmen. In vorteilhafter Weise ist die Klammer einteilig mit einem Gehäuseteil ausgebildet, so dass die Klammer besonders preiswert bei der Herstellung des Gehäuseteiles beim Spritzgießen mit diesem hergestellt werden kann. Während der Montage kann außerdem die Klammer nicht abhanden kommen, weil diese einteilig mit dem Gehäuseteil verbunden ist. Die Montage wird dadurch wesentlich erleichtert, weil lediglich die Klammer noch von einem Gehäuseteil zum anderen Gehäuseteil verschwenkt werden muss.

In einer ergänzenden Variante ist die Klammer mittels eines Filmscharniers mit dem einen Gehäuseteil verschwenkbar verbunden und/oder die Klammer mit dem einen Gehäuseteil an einem Abschnitt mit einer geringen Materialstärke verbunden ist, so dass die Klammer an dem Abschnitt mit der geringen Materialstärke verschwenkbar ist.

Erfindungsgemäße Kraftfahrzeugklimaanlage, insbesondere eine in dieser Anmeldung beschriebene Kraftfahrzeugklimaanlage, umfassend ein Gehäuse aus miteinander verbundenen Gehäuseteilen, eine Nut-Feder-Verbindung zur Verbindung der Gehäuseteile mit einer von einer ersten und zweiten Nutwandung begrenzten Nut an einem Gehäuseteil und einer Feder an einem anderen Gehäuseteil, wobei die Feder zur Verbindung in der Nut angeordnet ist, wenigstens eine Rastnase zum formschlüssigen Verbinden des einen Gehäuseteiles mit dem anderen Gehäuseteil, wobei die wenigstens eine Rastnase an einem Verlängerungsdorn ausgebildet ist.

In einer weiteren Variante weist die erste und/oder zweite Nutwandung eine Aussparung auf, durch welche der Verlängerungsdorn einführbar ist und die wenigstens eine Rastnase ist an der ersten und/oder zweiten Nutwandung im Bereich eines äußeren Endes der Aussparung verrastbar und/oder der Verlängerungsdorn ist als Verlängerung der Feder, insbesondere einteilig, ausgebildet.

Die Rastnase ist in die Nut-Feder-Verbindung integriert. Die Rastverbindung zwischen den beiden Gehäuseteilen kann damit besonders einfach hergestellt werden und es sind vorzugsweise auch keine zusätzlichen Bauteile notwendig, weil die wenigstens eine Rastnase einteilig mit dem Gehäuseteil mit der Feder ausgebildet ist.

Vorteilhafterweise ragt der an der Feder angeordnete Verlängerungsdern, der durch eine entsprechende Öffnung in der ersten und/oder zweiten Nutwandung bzw. in deren Verbindungsbereich oder im Nutgrund des zweiten Bauteils und ist nach der Montage der Bauteile zu einer formschlüssigen Verbindung, beispielsweise durch Heißnieten umgeformt oder stellt mit einem weiteren Element eine kraft- und/oder formschlüssige Verbindung her.

Das Auflegen und Verrasten der wenigstens einen Rastnase ist an der ersten und/oder zweiten Nutwandung möglich, so dass die formschlüssige Verbindung mittels der wenigstens einen Rastnase im Bereich der Nut-Feder-Verbindung erfolgt und dadurch kein zusätzlicher Bauraum erforderlich ist.

Im Nachfolgenden werden Ausführungsbeispiele der Erfindung unter Bezugnahme auf die beigefügten Zeichnungen näher beschrieben. Es zeigt:
- Fig. 1: einen Querschnitt einer Nut-Feder-Verbindung in einer ersten Ausführungsform vor dem Einführen einer Feder in eine Nut,
- Fig. 2: einen Querschnitt der Nut-Fecter-Verbindung gemäß Fig. 1 nach dem Einführen der Feder in die Nut,
- Fig. 3: einen Querschnitt der Nut-Feder-Verbindung in einer zweiten Aus- führungsform,
- Fig. 4: einen Querschnitt der Nut-Feder-Verbindung in einer dritten Aus- führungsform,
- Fig. 5: einen Querschnitt der Nut-Feder-Verbindung in einer vierten Aus- führungsform,
- Fig. 6: einen Querschnitt der Nut-Feder-Verbindung in einer fünften Aus- führungsform mit einer Klammer in einer ersten Ausführungsform,
- Fig. 7: einen Querschnitt der Nut-Feder-Verbindung in einer sechsten Ausführungsform mit der Klammer in einer zweiten Ausführungs- form,
- Fig. 8: einen Querschnitt der Nut-Feder-Verbindung in einer siebten Aus- führungsform mit einer an einem Verlängerungsdorn angeordne- ten Rastnase und
- Fig. 9: einen Querschnitt der Nut-Feder-Verbindung in einer achten Aus- führungsform.

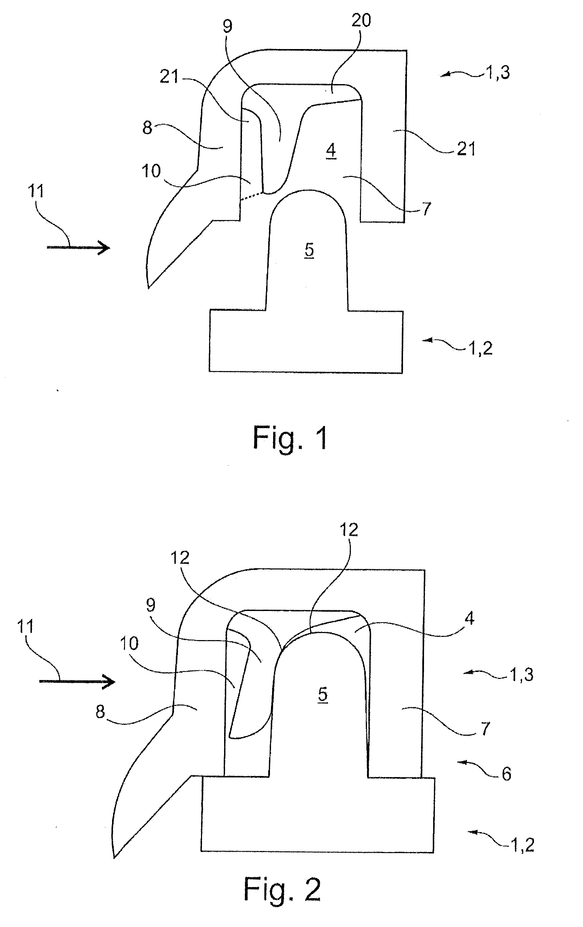

In Fig. 1 sind zwei Gehäuseteile 1 einer Kraftfahrzeugklimaanlage abgebildet. Die Kraftfahrzeugklimaanlage umfasst einen Kältemittelverdampfer, ein Gebläse und Luftleiteinrichtungen, z. B. Klappen, die in dem Gehäuse angeordnet sind (nicht dargestellt). Das Gehäuse der Kraftfahrzeugklimaanlage besteht einem ersten Gehäuseteil 2 und einem zweiten Gehäuseteil 3. Die beiden Gehäuseteil 2, 3 aus Kunststoff können mittels einer Nut-Feder-Verbindung 6 miteinander verbunden werden. In Fig. 1 ist der nicht verbundene Zustand zwischen dem ersten und zweiten Gehäuseteil 2, 3 abgebildet und in Fig. 2 der verbundene Zustand zwischen dem ersten und zweiten Gehäuseteil 2, 3. In Fig. 2 ist somit eine an dem ersten Gehäuseteil 2 ausgebildete Feder 5 in einer an dem zweiten Gehäuseteil 3 ausgebildeten Nut 4 angeordnet. Die Nut 4 weist einen Bodenbereich 20 und zwei Seitenbereich 21 auf.

In der Nut 4 ist eine Dichtlippe 9 aus einem elastischen Material aus Kunststoff angeordnet. Die Dichtlippe 9 ist in dem Bodenbereich 20 der Nut 4 stoffschlüssig mittels Umspritzen mit dem zweiten Gehäuseteil 3 verbunden. Die Länge der Dichtlippe 9 senkrecht zu einer Querrichtung 11 ist dabei nur geringfügig kleiner als die Länge der Feder 5 senkrecht zu der Querrichtung 11. Die Dichtlippe 9 und die Feder 5 weisen damit ungefähr die gleiche Länge senkrecht zu der Querrichtung 11 auf. Die Nut 4 wird von einer ersten Nutwandung 7 und einer zweiten Nutwandung 8 begrenzt. Die Dichtlippe 9 ist ferner mit Stützrippen 10 mit der zweiten Nutwandung 8 verbunden. Die Stützrippen 10 sind dabei senkrecht zu der Zeichenebene gemäß Fig. 10 ungefähr im Abstand von 30 mm ausgebildet. Die Stützrippen 10 bestehen dabei aus dem gleichen elastischen Material wie die Dichtlippe 9. Der Freiraum zwischen der Dichtlippe 9 und der ersten Nutwandung 7 ist kleiner als die Feder 5. Beim Einführen der Feder 5 in die Nut 4 zur Ausbildung der Nut-Feder-Verbindung 6 wird somit die Dichtlippe 9 in Richtung zu der zweiten Nutwandung 8 verformt. Diese Verformung ist möglich, weil im nicht eingebrachten Zustand der Feder 5 in die Nut 4 gemäß der Abbildung in Fig. 1 ein Abstand zwischen der Dichtlippe 9 und der zweiten Nutwandung 8 besteht. Auch nach dem Einführen der Feder 5 in die Nut 4 besteht zwischen der Dichtlippe 9 und der zweiten Nutwandung 8 ein Abstand. Dieser Abstand ist jedoch verkleinert und außerdem werden dabei auch die Stützrippen 10 verformt. Bei der Ausbildung der Nut-Feder-Verbindung 6 ist somit die Feder 5 elastisch zwischen der ersten Nutwandung 7 unter Vorspannung zwischen der Dichtlippe 9 und der ersten Nutwandung 7 eingeklemmt bzw. verspannt. Es bildet sich somit zwischen der Dichtlippe 9 und der Feder 5 eine Auflagefläche 12 aus, so dass eine fluiddichte Verbindung zwischen dem ersten und zweiten Gehäuseteil 2, 3, auch bei Verformungen der Gehäuseteile 1, gewährleistet ist, weil entsprechende Verformungen von der verformbaren Dichtlippe 9 und dem weiterhin vorhandenen Abstand zwischen der Dichtlippe 9 und der zweiten Nutwandung 8 aufnehmbar sind, so dass ständig die Auflagefläche 12 zum Abdichten vorhanden ist.

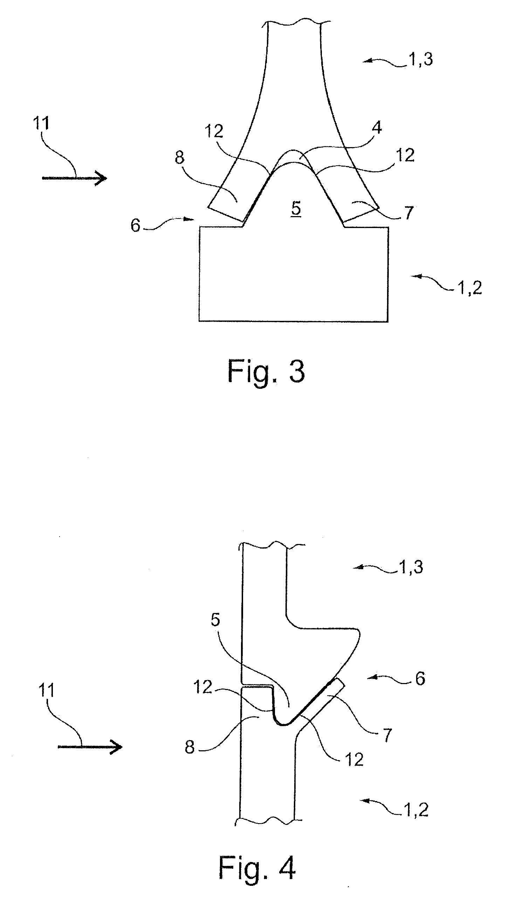

In Fig. 3 ist ein zweites Ausführungsbeispiel der Nut-Feder-Verbindung 6 abgebildet. Die erste und zweite Nutwandung 7, 8 sind dabei in einem spitzen Winkel zueinander ausgerichtet, so dass die Nut 4 im Querschnitt keilförmig ausgebildet ist. Auch die Feder 5 ist im Querschnitt keilförmig ausgebildet. In der Querrichtung 11 weist dabei vor dem Einführen der Feder 5 in die Nut 4 (nicht dargestellt) die Feder 4 größere Abmessungen auf als die Nut 4. Beim Einführen der Feder 5 in die Nut 4 werden somit die beiden Nutwandungen 7, 8 auseinandergedrückt, so dass die Feder 5 zwischen den beiden Nutwandungen 7, 8 unter Vorspannung eingeklemmt ist aufgrund der elastischen Verformung der beiden Nutwandungen 7, 8. Die Gehäuseteile 1 bestehen aus einem Kunststoff mit elastischen Eigenschaften, so dass derartige elastische Verformungen der beiden Nutwandungen 7, 8 möglich sind. Zwischen den beiden Nutwandungen 7, 8 und der Feder 5 bilden sich somit zwei Auflageflächen 12 zur Ausbildung einer fluiddichten Verbindung aus.

In Fig. 4 ist ein drittes Ausführungsbeispiel der Nut-Feder-Verbindung 6 abgebildet. Die beiden Nutwandungen 7, 8 weist eine unterschiedliche Dicke auf. Die erste Nutwandung 7 weist eine geringere Dicke auf als die zweite Nutwandung 8. Ferner ist die Nut 4 und die Feder 5 in analoger Weise zu dem zweiten Ausführungsbeispiel gemäß Fig. 3 dahingehend ausgebildet, dass in Querrichtung 11 die Feder 5 vor einem Einführen der Feder 5 in die Nut 4 größere Abmessungen aufweist als die Nut 4. Beim Einführen der.Feder 5 in die Nut 4 vergrößert sich somit die Nut 4, weil sich die erste Nutwandung 7 dahingehend verformt, dass sich die Nut 4 vergrößert. Das Vergrößern der Nut 4 wird dabei im Wesentlichen von einer Verformung der ersten Nutwandung 7 ausgeführt, weil die zweite Nutwandung 8 eine wesentlich größere Dicke aufweist als die erste Nutwandung 7, so dass die erste Nutwandung 7 wesentlich leichter zu verformen bzw. zu verbiegen ist als die zweite Nutwandung 8.

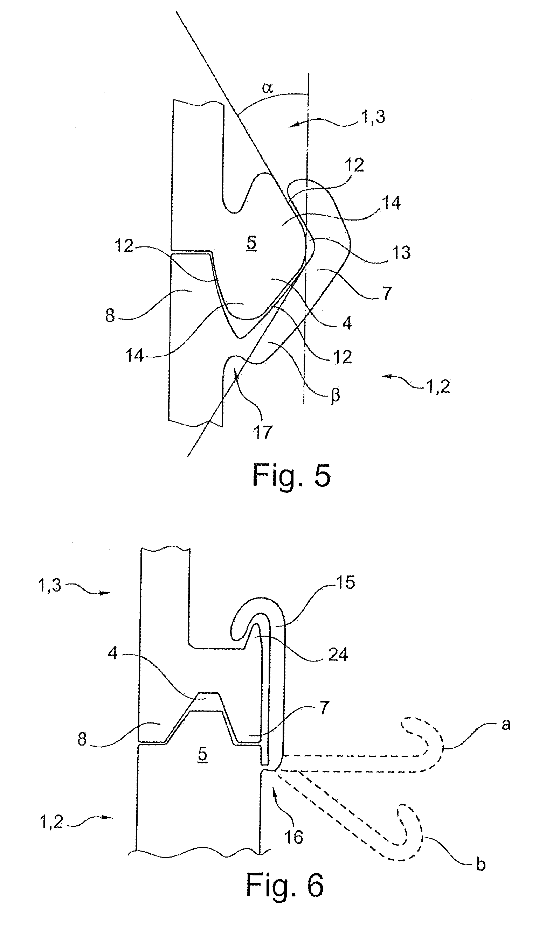

In Fig. 5 ist ein viertes Ausführungsbeispiel der Nut-Feder-Verbindung 6 dargestellt. Die von der ersten und zweiten Nutwandung 7, 8 gebildete bzw. eingeschlossene Nut 4 weist dabei eine Hinterschneidung 13 auf. Diese in Fig. 5 rechts abgebildete Hinterschneidung 13 ist als eine Hinterschneidung an der ersten Nutwandung 7 ausgebildet. Unterhalb des V-förmigen Einmündungsbereichs der ersten und zweiten Nutwandung 7,8 ist außerdem ein Abschnitt 17 mit einer geringen Materialstärke vorhanden. Hierzu ist außenseitig zwischen der ersten Nutwandung 7 und der zweiten Nutwandung 8 eine Ausnehmung vorhanden. Die Feder 5, welche einteilig mit dem zweiten Gehäuseteil 3 ausgebildet ist, weist zwei Vorsprünge 14 auf. Die beiden Vorsprünge 14 greifen dabei in die Hinterschneidung 13 und den V-förmigen Bereich an der ersten und/oder zweiten Nutwandung 7, 8 ein. Zum Einführen der Feder 5 in die Nut 4 gemäß dem vierten Ausführungsbeispiel muss die erste Nutwandung 7 dahingehend verschwenkt werden, dass sich die Nut 4 vergrößert. Hierzu wird die erste Nutwandung 7 im Wesentlichen um einen Drehpunkt der im Bereich des Abschnitts 17 liegt verschwenkt. Dadurch vergrößert sich die Nut 4. Ein Verschwenken der ersten Nutwandung 7 ist mit relativ geringen Kräften im Bereich des Abschnitts 17 mit geringer Materialstärke möglich. Anschließend kann die Feder 5 in die Nut 4 eingebracht werden und darauffolgend brauchen die für das Verformen bzw. Verschwenken der ersten Nutwandung 7 erforderlichen Kräfte nicht mehr auf die erste Nutwandung 7 aufgebracht werden. Dadurch wird die Feder 5 unter Vorspannung zwischen der ersten und zweiten Nutwandung 7, 8 eingeklemmt. Dabei bilden sich aufgrund der Geometrie der Nut 4 und der Feder 5 drei Auflageflächen 12 aus. Die drei Auflageflächen 12 und die Geometrie der Nut 4 und der Feder 5 ermöglichen damit einerseits, eine besonders fluiddichte Abdichtung der Nut-Feder-Verbindung 6, weil drei Auflageflächen 12 vorhanden sind. Ferner ist die Feder 5 in der Nut 4 form- und kraftschlüssig verklemmt, so dass die Nut-Feder-Verbindung 6 nur unter Wirkung von sehr großen Kräften wieder gelöst werden kann. In Fig.5 sind die Winkel α und β zweier Auflageflächen 12 zu einer Senkrechten auf die Verbindungsebene der beiden Gehäuseteile 2 und 3 eingetragen. Besonders günstig für eine gute Klemmwirkung der Nut-Feder-Verbindung 6 erweist sich, wenn der Winkel α größer als der Winkel β gewählt wird, wobei der Winkel α für den Winkel der ersten Nutwandung 7 am oberen Bereich und der Winkel β für den Winkel der Nutwandung 7 am unteren nahe der Verbindung zur zweiten Nutwandung 8 steht.

Fig. 6 zeigt ein fünftes Ausführungsbeispiel der Nut-Feder-Verbindung 6. Das erste Gehäuseteil 2 und das zweite Gehäuseteil 3 sind dabei neben der Nut-Feder-Verbindung 6 mittels einer Klammer 15 miteinander verbunden. An dem ersten Gehäuseteil 2 ist mittels eines Filmscharniers 16 einteilig die Klammer 15 ausgebildet. Die Klammer 15, das Filmscharnier 16 und das erste Gehäuseteil 2 bestehen aus dem gleichen Material, d. h. aus Kunststoff. Damit können in besonders vorteilhafter Weise die Klammer 15, das Filmscharnier 16 und das erste Gehäuseteil 2 beim Spritzgießen einteilig und damit besonders kostengünstig hergestellt werden. An dem zweiten Gehäuseteil 3 ist eine Klemmnase 24 vorhanden. Nach dem Einführen der Feder 5 in die Nut 4 muss zur endgültigen und lösbaren Verbindung zwischen dem ersten und zweiten Gehäuseteil 2, 3 lediglich die Klammer 15 von einer beispielsweise in Fig. 6 in Position "a" strichliert dargestellten Lage in die Lage gemäß Fig. 6 verschwenkt werden, so dass die Klammer 15 die Klemmnase 24 formschlüssig hintergreifen kann. Das Filmscharnier 16 ist dabei dahingehend ausgebildet, dass dieses die erforderlichen Kräfte aufnehmen kann. Bei der Montage der Kraftfahrzeugklimaanlage, d. h. dem Verbinden des ersten und zweiten Gehäuseteiles 2, 3, braucht somit lediglich die Feder 5 in die Nut 4 eingeführt und anschließend die Klammer 15 verschwenkt werden, so dass diese die Klemmnase 24 hintergreifen kann. Das erste und zweite Gehäuseteil 2, 3 sind aufgrund der Größe der Klammer 15 dann unter Vorspannung miteinander verbunden. Für den Herstellprozess mittels Kunststoffspritzgießens ist es vorteilhaft die Klammer 15 im Formwerkzeug in der in Fig. 6 in Position "b" strichliert dargestellten Position festzulegen. Durch die Vermeidung einer Hinterschneidung im Bereich des gekrümmten Endes der Kammer 15 ergibt sich eine bessere Entformbarkeit.

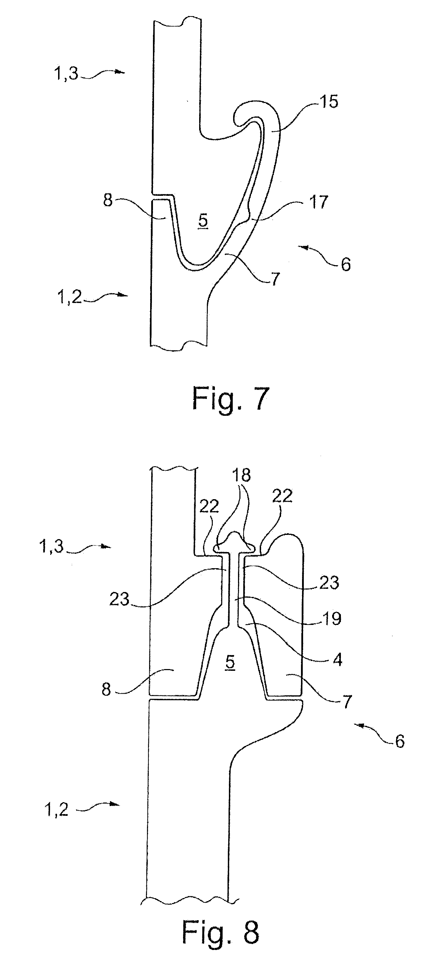

In Fig. 7 ist ein sechstes Ausführungsbeispiel der Nut-Feder-Verbindung 6 abgebildet. In analoger Weise zu dem fünften Ausführungsbeispiel gemäß Fig. 6 werden die beiden Gehäuseteile 2, 3 von einer Klammer 15 unter Vorspannung miteinander verbunden bzw. verklemmt. Die Klammer 15 ist dabei einteilig mit dem ersten Gehäuseteil 2 ausgebildet. Um das Verschwenken der Klammer 15 zu ermöglichen, werden in Abwandlung zu dem fünften Ausführungsbeispiel anstelle eines Filmscharniers 16 ein Abschnitt 17 mit geringer Materialstärke verwendet. Ansonsten entspricht das sechste Ausführungsbeispiel gemäß Fig. 7 dem fünften Ausführungsbeispiel.

In Fig. 8 ist ein siebtes Ausführungsbeispiel der Nut-Feder-Verbindung 6 abgebildet. An der Feder 5 ist einteilig mit dem ersten Gehäuseteil 2 ein Verlängerungsdorn 19 vorhanden, an dessen Ende zwei Rastnasen 18 vorhanden sind. Zwischen der ersten Nutwandung 7 und der zweiten Nutwandung 8 sind zylinderförmige Aussparungen 23 vorhanden. Die zylinderförmigen Aussparungen 23 sind beispielsweise in einem Abstand von 30 mm senkrecht zu der Zeichenebene gemäß Fig. 8 zwischen der ersten und zweiten Nutwandung 7, 8 ausgebildet. Dies gilt analog für die Verlängerungsdorne 19, die ebenfalls senkrecht zu der Zeichenebene gemäß Fig. 8 beispielsweise im Abstand von 30 mm an der Feder 5 vorhanden sind. Selbstverständlich ist es auch denkbar, dass die Aussparungen 23 schlitzförmig verlaufend ausgebildet sind. Die beiden Rastnasen 18, der Verlängerungsdorn 19, die Feder 5 und das erste Gehäuseteil 2 bestehen aus einem elastischen Kunststoff. Beim Einführen der Feder 5 in die Nut 4 wird ebenfalls der Verlängerungsdorn 19 mit den Rastnasen 18 in die zylinderförmige Aussparung 23 eingeführt. Die beiden Rastnasen 18 sind dabei größer als die Aussparung 23, so dass sich diese aufgrund ihrer elastischen Eigenschaften beim Einführen in die Aussparung 23 verformen und beiden Rastnasen 18 durch die Aussparung 23 hindurchgeführt werden können. Nach dem Austreten der beiden Rastnasen 18 aus der zylinderförmigen Aussparung 23 verformen sich die beiden Rastnasen 18 wieder in ihre ursprüngliche Form, die in Fig. 8 abgebildet ist. Aufgrund dieser elastischen Rückverformung der beiden Rastnasen 18 können die beiden Rastnasen 18 das zweite Gehäuseteil 3 hintergreifen, so dass die beiden Rastnasen 18 an der ersten und zweiten Nutwandung 7, 8 als Rastauflage 22 aufliegen und dadurch eine formschlüssige Verbindung zwischen dem ersten Gehäuseteil 2 und dem zweiten Gehäuseteil 3 herstellen. Vorzugsweise erfolgt diese Verbindung unter Vorspannung. Das erste und zweite Gehäuseteil 2, 3 ist damit zuverlässig verbunden, so dass im Wesentlichen keine Gefahr mehr besteht, dass sich die beiden Gehäuseteile 2, 3 voneinander lösen.

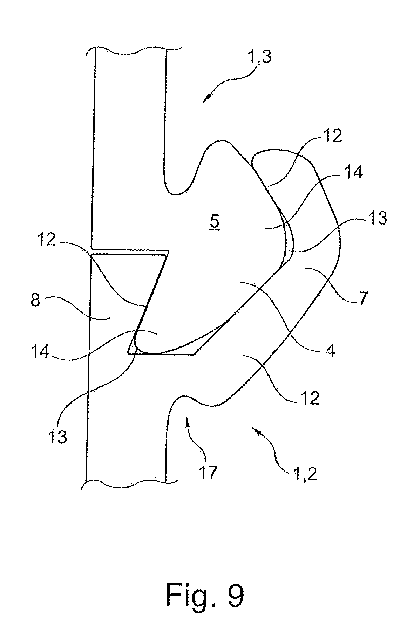

In Fig. 9 ist ein achtes Ausführungsbeispiel der Nut-Feder-Verbindung 6 ähnlich dem in Fig.5 dargestellten Ausführungsbeispiel dargestellt. Die von der ersten und zweiten Nutwandung 7, 8 gebildete bzw. eingeschlossene Nut 4 weist dabei allerdings zwei Hinterschneidungen 13 auf. Die erste in Fig. 9 rechts abgebildete Hinterschneidung 13 ist als eine Hinterschneidung an der ersten Nutwandung 7 ausgebildet. Die zweite Hinterschneidung 13, in Fig. 9 weiter unten abgebildet, ist dabei zwischen der ersten und der zweiten Nutwandung 7, 8 vorhanden. Die Wandstärke der zweiten Nutwandung 8 nimmt vom oberen Endbereich bis zum Anschlussbereich der ersten Nutwandung 7 ab, sodass sich eine keilförmige Kontur ergibt. Unterhalb der zweiten Hinterschneidung 13 ist wie in Fig.5 ein Abschnitt 17 mit einer geringen Materialstärke vorhanden.

In einem weitem nicht dargestellten Ausführungsbeispiel kann das erste mit dem zweiten Gehäuseteil 2, 3 zusätzlich neben der Nut-Feder-Verbindung 6 mit einer Niete oder einer Schraube miteinander verbunden werden.

In einem weitern nicht dargestellten Ausführungsbeispiel ist zwischen dem ersten und zweiten Gehäuseteil 2, 3 eine Aussparung 23 vorhanden. Vorzugsweise ist diese Aussparung 23 im Bereich der Nut-Feder-Verbindung 6 vorhanden. Eine Klammer 15 weist einen Steg auf, an dessen Enden jeweils Querstege ausgebildet sind, so dass die Enden des Steges T-förmig sind. In die Aussparung 23 wird diese Klammer 15 eingefügt, wobei der Steg nur geringfügig kleiner ist als die Aussparung 23. Die T-förmigen Stege werden dabei aufgrund ihrer elastischen Eigenschaften verformt, so dass die T-förmigen Enden durch die Aussparung 23 durchgeführt werden können. Nach dem Durchführen hintergreifen die beiden T-förmigen Enden des Steges formschlüssig das erste und zweite Gehäuseteil 2, 3, so dass dadurch die beiden Gehäuseteile 2, 3 formschlüssig miteinander verbunden sind.

In einem weiteren nicht dargestellten Ausführungsbeispiel ist an einem Gehäuseteil 1 ein Verbindungsdorn ausgebildet. An einem anderen Gehäuseteil 1 ist eine Aussparung vorhanden, in die beim Verbinden der beiden Gehäuseteile 2, 3 miteinander der Verbindungsdorn eingeführt wird. Nach dem Verbinden bzw. Zusammenfügen des ersten und zweiten Gehäuseteiles, d. h. dem Einführen der Feder 5 in die Nut 4, steht der Verbindungsdorn geringfügig über die Aussparung hinaus und wird dort z. B. mittels Schweißen oder Heißnieten mit dem Gehäuseteil form- und/oder kraftschlüssig verbunden. Der Verbindungsdorn und die beiden Gehäuseteile sind dabei aus Kunststoff ausgebildet. Anstelle des beschriebenen Verschweißens kann der Verbindungsdorn auch mittels einer Federscheibe mit dem Gehäuseteil verbunden werden. Hierzu wird auf den Verbindungsdorn, der durch die Aussparung nach dem Verbinden heraussteht, die Federscheibe aufgeschoben. Die Federscheibe ist beispielsweise tellerförmig und weist zentrisch eine Bohrung auf. Zu der zentrischen Bohrung sind radial Schlitze angeordnet, welche ein Verformen der Federscheibe ermöglichen.

In einer weiteren nicht dargestellten Ausführungsform sind zusätzlich zu der Nut-Feder-Verbindung 6 an einem Gehäuseteil 1 Dorne vorhanden, die in entsprechende Aussparungen eingreifen. Die Dorne dienen zur zusätzlichen Ausrichtung der Nut-Feder-Verbindung 6.

Die Einzelheiten der verschiedenen Ausführungsbeispiele sind miteinander kombinierbar, sofern nichts Gegenteiliges erwähnt wird.

Insgesamt betrachtet sind mit der erfindungsgemäßen Kraftfahrzeugklimaanlage erhebliche Vorteile verbunden. Beim Verbinden der Gehäuseteile 1 zu dem Gehäuse der Kraftfahrzeugklimaanlage wird einerseits die Montage erleichtert und andererseits weist die Nut-Feder-Verbindung 6 auch bei Verformungen im Bereich der Nut-Feder-Verbindung 6 eine ausreichende Dichtheit auf und ist außerdem nur unter Wirkung von sehr großen Kräften lösbar.

### Bezugszeichenliste

- 1: Gehäuseteile
- 2: Erstes Gehäuseteil
- 3: Zweites Gehäuseteil
- 4: Nut
- 5: Feder
- 6: Nut-Feder-Verbindung
- 7: Erste Nutwandung
- 8: Zweite Nutwandung
- 9: Dichtlippe
- 10: Stützrippe
- 11: Querrichtung
- 12: Auflagefläche
- 13: Hinterschneidung
- 14: Vorsprung
- 15: Klammer
- 16: Filmscharnier
- 17: Abschnitt mit geringer Materialstärke
- 18: Rastnase
- 19: Verlängerungsdorn
- 20: Bodenbereich der Nut
- 21: Seitenbereich der Nut
- 22: Rastauflage
- 23: Aussparung
- 24: Klemmnase

## Patentansprüche

1. Kraftfahrzeugklimaanlage, umfassend
- ein Gehäuse aus miteinander verbundenen Gehäuseteilen (1, 2, 3),
- eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet ist,
**dadurch gekennzeichnet, dass**
in der Nut (4) eine Dichtlippe (9) angeordnet ist und die Feder (5) zwischen der Dichtlippe (9) und der ersten Nutwandung (7) der Nut (4) angeordnet ist.

2. Kraftfahrzeugklimaanlage nach Anspruch 1, **dadurch gekennzeichnet, dass** die Dichtlippe (9) im nicht eingebrachten Zustand der Feder (5) in der Nut (4) einen Abstand zu der zweiten Nutwandung (8) aufweist, um die Dichtlippe (9) beim Einführen der Feder (5) in die Nut (4) zu der zweiten Nutwandung (8) biegen zu können.

3. Kraftfahrzeugklimaanlage nach Anspruch 1 oder 2, **dadurch gekennzeichnet, dass** die Dichtlippe (9) wenigstens teilweise aus einem elastischen Material, z. B. Kunststoff, besteht.

4. Kraftfahrzeugklimaanlage nach einem oder mehreren der vorhergehenden Ansprüche, **dadurch gekennzeichnet, dass** das Gehäuse wenigstens teilweise aus Kunststoff besteht und die Dichtlippe (9), vorzugsweise mittels Umspritzen, an der ersten und/oder zweiten Nutwandung (7, 8) befestigt ist.

5. Kraftfahrzeugklimaanlage, umfassend
- ein Gehäuse aus miteinander verbundenen Gehäuseteilen (1, 2, 3),
- eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet ist,
**dadurch gekennzeichnet, dass**
die Feder (5) vor einem Einführen der Feder (5) in die Nut (4) in Querrichtung größer ist als die Nut (4), so dass wenigstens eine Nutwandung (7, 8) bei einem Einführen der Feder (5) in die Nut (4) von der Feder (5) verformbar, insbesondere biegbar, ist.

6. Kraftfahrzeugklimaanlage nach Anspruch 5, **dadurch gekennzeichnet, dass** die wenigstens eine Nutwandung (7, 8) in Querrichtung von der Feder (5) beim Einführen der Feder (5) in die Nut (4) dahingehend verformbar ist, dass sich die Nut (4) vergrößert.

7. Kraftfahrzeugklimaanlage nach Anspruch 5 oder 6, **dadurch gekennzeichnet, dass** die erste Nutwandung (7) eine geringere Wandstärke aufweist als die zweite Nutwandung (8), so dass im Wesentlichen die erste Nutwandung (7) beim Einführen der Feder (5) in die Nut (4) verformbar ist.

8. Kraftfahrzeugklimaanlage nach einem oder mehreren der Ansprüche 5 bis 7, **dadurch gekennzeichnet, dass** die Feder (5) in Querrichtung um wenigstens 1 % größer ist als die Nut (4), so dass die wenigstens eine Nutwandung (7, 8) um wenigstens 0,5 % der Abmessung der Feder (5) in Querrichtung bei dem Einführen der Feder (5) in die Nut (4) von der Feder (5) verformbar, insbesondere biegbar, ist.

9. Kraftfahrzeugklimaanlage nach einem oder mehreren der Ansprüche 5 bis 8, **dadurch gekennzeichnet, dass** die erste und zweite Nutwandung (7, 8) in einem spitzen Winkel zueinander ausgerichtet sind, so dass die Nut (4) einen keilförmigen Querschnitt aufweist und/oder die Feder (5) einen keilförmigen Querschnitt aufweist.

10. Kraftfahrzeugklimaanlage, umfassend
- ein Gehäuse aus miteinander verbundenen Gehäuseteilen (1, 2, 3),
- eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet und die Feder (5) in der Nut (4) formschlüssig fixiert ist,
**dadurch gekennzeichnet, dass**
die Geometrie der Feder (5) und der Nut (4) dahingehend ausgebildet sind, dass sich im Querschnitt wenigstens drei Auflageflächen (12) der Feder (5) auf der ersten und/oder zweiten Nutwandung (7, 8) ergeben und/oder die Nut (4) wenigstens zwei Hinterschneidungen (13) aufweist in die wenigstens zwei Vorsprünge (14) der Feder (5) eingreifen zur formschlüssigen Fixierung.

11. Kraftfahrzeugklimaanlage nach Anspruch 10, **dadurch gekennzeichnet, dass** die Feder (5) und die erste und/oder zweite Nutwandung (7, 8) wenigstens drei ebene und/oder konvexe Flächen aufweisen an denen die Feder (5) auf der ersten und/oder zweiten Nutwandung (7, 8) aufliegt.

12. Kraftfahrzeugklimaanlage, insbesondere Kraftfahrzeugklimaanlage gemäß einem oder mehrerer der vorhergehenden Ansprüche, umfassend
- ein Gehäuse aus miteinander verbundenen Gehäuseteilen (1, 2, 3),
- eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet ist,
- eine an dem einen und dem anderen Gehäuseteil (1, 2, 3) angeordnete Klammer (15) zum Verbinden des einen Gehäuseteils (1, 2, 3) mit dem anderen Gehäuseteil (1, 2, 3),
**dadurch gekennzeichnet, dass**
die Klammer (15) einteilig mit einem Gehäuseteil (1, 2, 3) verbunden ist.

13. Kraftfahrzeugklimaanlage nach Anspruch 12, **dadurch gekennzeichnet, dass** die Klammer (15) mittels eines Filmscharniers (16) mit dem einen Gehäuseteil (1, 2, 3) verschwenkbar verbunden ist und/oder die Klammer (15) mit dem einen Gehäuseteil (1, 2, 3) an einem Abschnitt (17) mit einer geringen Materialstärke verbunden ist, so dass die Klammer (15) an dem Abschnitt (17) mit der geringen Materialstärke verschwenkbar ist.

14. Kraftfahrzeugklimaanlage, insbesondere Kraftfahrzeugklimaanlage gemäß einem oder mehrerer der vorhergehenden Ansprüche, umfassend
- ein Gehäuse aus miteinander verbundenen Gehäuseteilen (1, 2, 3),
- eine Nut-Feder-Verbindung (6) zur Verbindung der Gehäuseteile (1, 2, 3) mit einer von einer ersten und zweiten Nutwandung (7, 8) begrenzten Nut (4) an einem Gehäuseteil (1, 2, 3) und einer Feder (5) an einem anderen Gehäuseteil (1, 2, 3), wobei die Feder (5) zur Verbindung in der Nut (4) angeordnet ist,
- wenigstens eine Rastnase (18) zum formschlüssigen Verbinden des einen Gehäuseteiles (1, 2, 3) mit dem anderen Gehäuseteil (1, 2, 3).
**dadurch gekennzeichnet, dass**
die wenigstens eine Rastnase (18) an einem Verlängerungsdorn (19) ausgebildet ist.

15. Kraftfahrzeugklimaanlage nach Anspruch 14, **dadurch gekennzeichnet, dass** die erste und/oder zweite Nutwandung (7, 8) eine Aussparung (23) aufweist, durch welche der Verlängerungsdorn (19) einführbar ist und die wenigstens eine Rastnase (18) an der ersten und/oder zweiten Nutwandung (7, 8) im Bereich eines äußeren Endes der Aussparung (23) verrastbar ist und/oder der Verlängerungsdorn (19) als Verlängerung der Feder (5), insbesondere einteilig, ausgebildet ist.
